# EUROPEAN PATENT APPLICATION

(11) **EP 3 747 279 A1**
(43) Date of publication of application: **09.12.2020**
(21) Application number: 19020368.7
(22) Date of filing: 05.06.2019
(51) Int. Cl.: A23G 3/52, A23G 1/52, A23G 4/18, A23G 9/46, B01F 3/04, A23C 13/12, A23F 5/24, A23L 2/40

(54) **METHOD OF PRODUCING GAS HYDRATES, SLURRY COMPRISING GAS HYDRATES, USES OF GAS HYDRATES AND POROUS POWDERS OBTAINED BY SAID METHOD**

(71) Applicant: ETH Zürich vertreten durch Prof. Dr. Erich Windhab, 8092 Zürich (CH)
(72) Inventor: The designation of the inventor has not yet been filed
(74) Representative: Beyer, Rudi

(57) **Abstract**

The present invention relates to products from porous materials, generated by foaming with gas hydrates or gas hydrate slurries dosed into matrices of biological, organic or inorganic materials in their liquid to paste-like state.

A method of producing a water phase continuous slurry comprising gas hydrates, a method of producing a porous powder or foam as well as the use of gas hydrates for producing a porous powder or foam or for gasifying viscous liquid are also claimed.

The porous powder or viscous foam, wherein the powder or foam has a closed porosity of 15% to 100%, or 20% to 50%, or 25% to 35%, or 30 to 35%, or about 30%.

## Description

### FIELD OF THE INVENTION

The present invention relates to products from porous materials, generated by foaming with gas hydrates or gas hydrate slurries dosed into matrices of biological, organic or anorganic materials in their liquid to paste-like state.

### BACKGROUND TO THE INVENTION

Micro-foaming of highly viscous to paste-like (semi-liquid) material systems (> ca. 5 Pas) is difficult, since in case of (1) foaming by conventional gas dispersing, applying flow stresses to the paste in order to enable breakup of larger gas bubbles into smaller ones, leads to pronounced dissipation of viscous friction energy into heat.

In the alternative case of (2) foaming by gas dissolution in the highly viscous liquid system under elevated static pressure and subsequent foaming under controlled pressure release, it is likewise difficult to dissolve a sufficiently large gas fraction at subcritical conditions evenly and on a relevant time scale for continuous processing (of e.g. < 1-10 minutes).

A third possibility to foam highly viscous fluid systems is offered by the addition of solid propellants/blowing agents which are mixed into the fluid and release gas when e.g. thermally or mechanically activated. However there is only a limited number of solid propellants/blowing agents without toxic or environmentally non-desirable side effects as well as with sufficient gas release capacity to achieve higher gas fractions in related products without incorporating large fractions of such agents into resulting products with further adverse effects on product functionality.

Accordingly, the invention described in the following applies a small fraction of a concentrated watery suspension of gas hydrate crystals into the viscous / paste-like base material system under temperature and pressure conditions keeping the gas hydrate crystals in a thermodynamically sufficiently stable state. Subsequently temperature is increased and/or static pressure reduced to dissociate the gas hydrate crystals from which during dissociation a large fraction of entrapped gas of up to the 160-170 fold of the gas hydrate crystal volume is released, thus foaming the paste-like base material system evenly.

Gas hydrates are water-based solid gas inclusion compounds, in which gas molecules are physically entrapped in a network of cavities made up of water molecules held together by hydrogen bonds (Marinhas et al., 2007, International J. of Refrigeration 30(5), pp 758-766).

Gas hydrates exist at moderate pressures and low temperatures and possess a high volumetric gas storage capacity. The innovative idea of replacing highly energetically demanding foaming of viscous slurries using pure gas with the a gas hydrate based foaming technology using the instability of such under ambient conditions constitutes the core of this patent application.

Foaming of fluid matrices has a strong impact on (1) their rheological behaviour, but as well on (2) other physical characteristics related to heat and mass transfer (e.g. reduction of heat and mass transfer coefficients) or (3) mechanical behaviour (e.g. compressibility, mechanical damping characteristics, lightweight). This makes foamed materials preferred for a large variety of applications in the fields of (i) building materials, (ii) ceramics, (iii) polymers, ((iv) foods, (v) cosmetics and even (vi) metals.

In patent literature there are numerous patents found for the generation of foams in the industrial and material-related fields before-mentioned. All of these are either based on:
(A) the generation of gas dispersions by introducing a gas into a liquid matrix and refining the gas bubbles by mechanical stresses applied through the fluid flow, as generally practised in mixing/dispersing devices or
(B) by applying natural propelling agents like baking soda in foods, chemical propellants (exothermic: like e.g. Azodicarbonamid (ADC) and Sulfonylhydrazides or endothermic: like e.g. hydrazine) used for foaming of synthetic polymer systems or titanium hydride for metal foams generation.

In the patent application described here, we focus on the type (B) of microfoaming by the use of a novel type of propellants / blowing agents, being gas hydrates or slurries of the same containing gas hydrate crystals.

There is neither patent literature nor other scientific/non scientific publications on the use of gas hydrates (sometimes also denoted as clathrate hydrates) as propellants / blowing agents in order to generate foams or aerogels from foamable liquid to semi-liquid matrices (low viscous solutions to paste-like/gel-like multi-phase systems)

### SUMMARY OF THE INVENTION

The inventors have surprisingly found that gas hydrates (ice powders) or suspensions/slurries of such may be used for foaming various types of liquid to paste-like matrix fluid systems (MF) with watery or non-watery continuous liquid phases. The inventors have surprisingly found that the high gas loading capacity of the gas hydrates (sometimes also denoted as CLAthrate hydrates) may enable foam formation with very high porosity, of up to 90%. Since related gas hydrate slurries were produced successfully in a high pressure loop reactor (in the following also denoted as CLAthrate hydrate Generator, in short CLAG) can flexibly apply different natural non-toxic gases / gas mixtures, there is a wide range of materials for daily use or consumption by people (building materials, ceramics, plastics, wound care materials, foods, cosmetics, metals), such gas hydrate based foaming technology can be applied for.

Accordingly, one aspect the present invention provides use of gas hydrates or gas hydrate slurries for producing foamed liquids, pastes or solid material pieces including powders. The gas may be air and/or may comprise one or more of carbon dioxide, nitrogen, nitrous oxide, oxygen, noble gases, hydrocarbons, propane, ethylene, methane and nitrous oxide or mixtures thereof, preferably carbon dioxide and/or nitrogen or mixtures thereof.

According to another aspect, the present invention provides use of gas hydrates for gasifying liquid to semi-liquid fluid systems with their viscosities ranging from water-like 0.001 Pas to highly paste-like 1000 Pas. The gas may be air and/or may comprise one or more of carbon dioxide, nitrogen, nitrous oxide and argon, preferably carbon dioxide and/or nitrogen. According to another aspect, the matrix fluid / gas hydrate (slurry) mixtures can be stored below the critical gas hydrate dissociation conditions (at sufficiently low temperature and sufficiently high static pressure) and when added to a fluid to semi-solid matrix material system under supercritical gas hydrate dissociation conditions leading to controlled volume expansion / foaming.

In some embodiments a viscous sugar solution is chosen as representative solution-based liquid material with easy to adjust viscosity by increasing sugar concentration or molecular weight of the sugar type mixture (e.g. varying the dextrose equivalent (DE) of the sugar solutions derived from enzymatically degraded starch, between DE 6 to DE 40, with the number denoting the weight percentage of reducing sugars in the dry matter calculated as glucose; small DE value thus stand for longer Oligosaccharide chain length = less enzymatically degraded starch transferred into glucose units) and with pronounced freezing point depression.

Such sugar solutions represent in the following description of the invention any other watery solutions with or without additionally contained disperse components, including non-watery/immiscible fluids or gas bubbles.

Such representative sugar solution with an exemplary dissolved sucrose content of 25%and with CO₂ as exemplary gas added is cooled between -10°C and 10°C, or to between -5°C and 5°C, or no lower than about -5°C and/or the gas pressure is adjusted from 10 to 300 bar, or from 15 to 100 bar, or from 15 to 30 bar.

In some embodiments the method comprises cooling the sugar solution in steps to between 0 and 8°C, or to about 5°C; and pressurising the sugar solution e.g. with carbon dioxide, preferably at 15-30 bar, or about 20 bar, prior to pressurising the sugar solution with nitrogen, preferably at 30-50 bar or about 35 bar.

In some embodiments the method further comprises a step of distributing the gas hydrate in the concentrated sugar solution.

According to another aspect, the present invention provides a sugar solution based slurry (in short denoted as 3S slurry) comprising gas hydrates, wherein the gas is air and/or comprises one or more of carbon dioxide, nitrogen, nitrous oxide and argon, preferably carbon dioxide and/or nitrogen. The 3S slurry may be obtained by the above-mentioned method.

In some embodiments the sugar solution comprises 10 wt% to 65 wt%, 10 wt% to 50 wt%, 20 wt% to 40 wt%, or about 30 wt% sugar solids.

In some embodiments the sugar solution-based slurry has a viscosity of between 10⁻² and 10 Pas, or between 20mPas and 10 Pas, or between 30mPas and 1Pas, or about 30 mPas or more, and/or about 100 mPas or less, preferably wherein the viscosity of the sugar solution- based slurry including the gas hydrate crystals is greater than the viscosity of the sugar solution, preferably by up to 8 times.

In some embodiments the 3S slurry comprises 0.01-7.5 mol/L, 0.1-7.5 mol/L, 1-5 mol/L, 1-3 mol/L, or about 1-2mol/L of gas. In some preferred embodiments the 3S slurry comprises carbon dioxide, preferably 0.5-5 mol/L, 1-5 mol/L, 1-2 mol/L, or about 1.4 mol/L of carbon dioxide. In some embodiments the 3S slurry has a ratio of gas in the hydrate fraction to gas in the liquid fraction (H:L) of from 5:1 with volumetric hydrate fractions of 10 to 35 vol%, to H:L of about 1.2:1 at about 10 vol% hydrate, or preferably about 2:1 at about 17 vol% gas hydrate fraction.

According to another aspect, the present invention provides a method of producing a porous solid powder from the 3S slurry comprising:
(a) mixing the Sugar Solution-based Slurry (3S) comprising gas hydrate crystals and another liquid to semi-liquid Matrix Fluid (MF, solution or dispersion) to provide a mixed 3SMF fluid system;
(b) releasing the pressure and/or increasing the temperature of the 3SMF fluid system to provide a 3SMF foam;
(c) Fixing the 3SMF foam by drying, freezing or freeze-drying, to provide either (i) a frozen or (ii) a dried porous 3SMF product
(d) in case of (ii) additional grinding provides a porous powder.

In some embodiments the MF solution or dispersion comprises 10 wt% to 75 wt%, 30 wt% to 75 wt%, 50 wt% to 75 wt%, 50 wt% to 70 wt%, 60 wt% to 65 wt%, or about 60 wt% solids in the soluble or non-soluble state. Preferably, the MF solution or dispersion does not comprise gas hydrates.

In some embodiments the gas hydrates in the 3SMF fluid system substantially disperse upon mixing. In some embodiments the 3S fluid system is added to the MF solution or dispersion under approximately isobaric and isothermal conditions, preferably wherein the approximately isobaric-isothermal conditions are a temperature of between -10°C and 10°C, or between 0°C and 10°C, or between 0°C and 5°C, or about 2°C and/or a gas pressure from 10 to 300 bar, or from 15 to 100 bar, or from 15 to 50 bar, or from 15 to 30 bar. In some embodiments the 3S fluid system is added to the MF solution or dispersion until the 3SMF mixed fluid system reaches an overrun (increase in volume compared to the non-foamed fluid volume) of from 50 to 1000%, or from 100 to 500%, or from 100 to 150%, or from 150% to 200%.

In some embodiments in the step of releasing the pressure and/or increasing the temperature of the 3SMF fluid system, the pressure is released preferably stepwise to between 1 bar and 100 bar, or to between 5 bar to 50 bar before finally extruding it into an atmospheric/ambient surrounding, and/or the temperature of the 3SMF fluid system is increased to between -5°C and 10°C, or to above 0°C, or about 5°C. The method may comprise an additional step of reducing the temperature and/or fast-freezing the foamed 3SMF fluid system, prior to freeze-drying or drying.

According to another aspect, the present invention provides a porous sugar powder, wherein the powder has a closed porosity of 10% to 90%, or 20% to 50%, or 25% to 35%, or 30% to 35%, or about 30% and/or an open porosity of 10% to 90%, or 20% to 50% or, 25% to 35%, or 30 to 35%, or about 30%.

In some embodiments the finalized dried or frozen 3SMF product has a bimodal closed pore distribution or a mixed open/closed pore distribution. The bimodal closed pore distribution may comprise (i) a larger closed pore fraction (LPF) with an average pore diameter of 20 to 200 microns, or 20 to 50 microns, or about 40 microns; and (ii) a smaller closed pore fraction (SPF) with an average diameter of less than about 20 microns, or 1 to less than 20 microns, or 1-15 or 1-10 microns, or 2-5 microns. In some embodiments (i) contributes 10 to 99% by volume of the total closed pore volume and/or (ii) contributes 1 to 90% by volume of the total closed pore volume; and/or (i) contributes 10 to 90% by number of the total closed pores and/or (ii) contributes 10 to 90% by number of the total closed pores.

### DESCRIPTION OF DRAWINGS

**Figure 1** - **Gas hydrate phase diagrams for sugar system.**
   Phase diagram for the CO₂ hydrate sugar system compared with the thermodynamic model for pure water-CO₂ and aqueous sugar solutions of 25, 30, 40 and 50 wt% -CO₂ systems. In (b) the CO₂/N₂ phase diagram from Kang, S.P., et al., 2001. The Journal of Chemical Thermodynamics, 33(5), pp.513-521.
**Figure 2** - **High-pressure CLAG (CLAthrate hydrate slurry Generator) reactor processing variables from preparatory experiments of foaming media for different transfer trials.**
   Sugar solution-based slurry (3S) generation processing variables. Viscosity, density, pressure and temperature for 25 wt% and 50 wt% sugar solutions.
   All experiments were done from 25 wt% sugar solutions. The induction time for the hydrate appearance are labelled on the time axis. (Abbreviations T stand for temperature, p for pressure, η for viscosity and ρ for density)

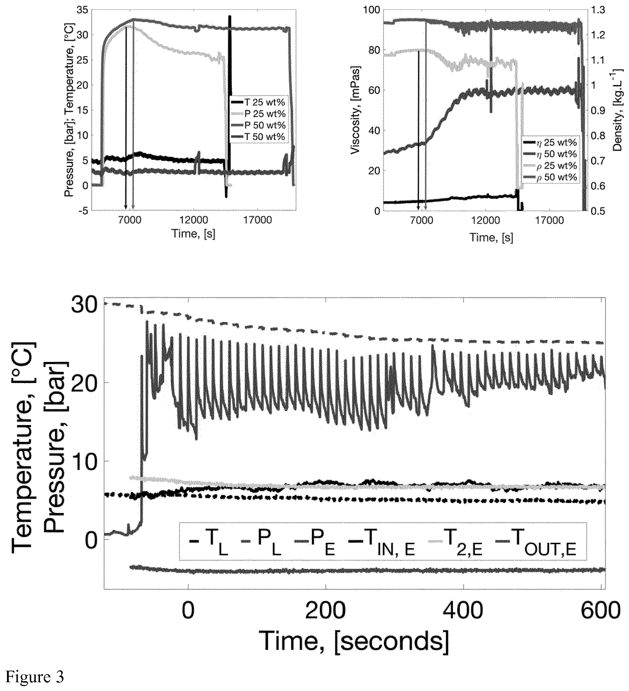

**Figure 3** **-Process variable profiles during transfer of 3S slurries**
   Operational variable profiles during transfer of the 25 wt% sugar CO₂ hydrate slurry (3S slurry) transferred into a 40% solids containing emulsion system.
   L: refers to side stream (i.e. 3S). E: refers to MF, main stream. T_{,IN E}= temperature inlet. T_{L}=Tₗₒₒₚ, i.e. isothermal transfer, where T>0°C. T_{2,E}= temperature between surface scraped heat exchanger 1 and 2. T_{out, E} = temperature at outlet or the MF main stream.

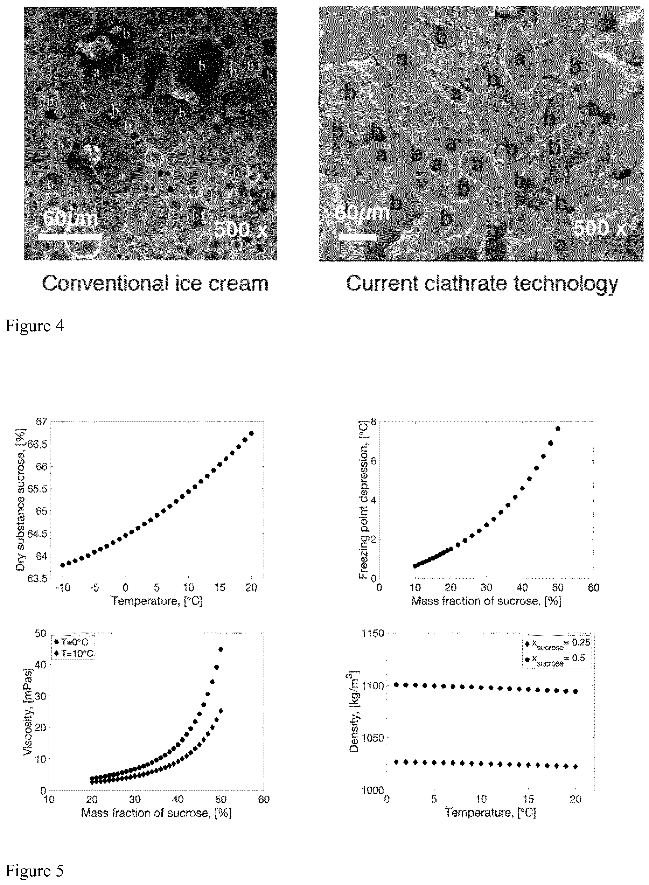

**Figure 4** - **Cryo-Scanning electron microscopy images.**
   Cryo-Scanning electron microscopy images of microstructure of the frozen 3SMF sugar solution system samples.
**Figure 5** - **Properties of sucrose solutions**
   adapted from Mathlouthi and Reiser, 1995, Sucrose: Properties and applications, Springer US.

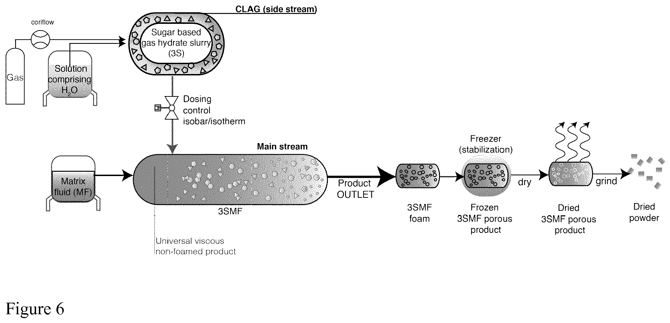

**Figure 6** **-Graphical abstract representing the application and denoting flow streams and treatment steps**

### DETAILED DESCRIPTION

### Gas hydrate

"Gas hydrates" are also known as clathrate hydrates or water clathrates. Gas hydrates are crystalline water-based solids physically resembling ice, in which gases are trapped inside "cages" of hydrogen bonded water molecules.

Most low molecular weight gases, including O₂, H2, N₂, N₂O, CO₂, CH₄, H₂S, Ar, Kr, Ne, He and Xe, will form hydrates at suitable temperatures and pressures, known to those of skill in the art. For example, Mohammadi, A.H. and Richon, D., 2008. Journal of Chemical & Engineering Data, 54(2), pp.279-281 describes the formation of N₂O and CO₂ hydrates in pure water. Kang, S.P., et al., 2001. The Journal of Chemical Thermodynamics, 33(5), pp.513-521 describes the formation of CO₂, N₂ and CO₂/N₂ hydrates in pure water. Barrer, R.M. and Edge, A.V.J., 1967. Proceedings of the Royal Society of London. Series A. Mathematical and Physical Sciences, 300(1460), pp.1-24 describes the formation of Ar, Kr and Xe hydrates in pure water. Gas hydrates may be formed by providing a suitable gas and reducing the temperature and/or increasing the gas pressure of a suitable solution (e.g. a coffee extract solution).

The identity of the gas is not particularly limited. Any gas suitable for producing a porous solid or frozen material /or suitable for use in industrial food processes may be used. For example, the gas may be air and/or may comprise one or more of carbon dioxide, nitrogen, nitrous oxide and argon. In preferred embodiments the gas comprises carbon dioxide and/or nitrogen. In some embodiments the gas hydrates comprise substantially the same gas. In some embodiments the gas is a pure gas (for example comprising 99% or more, or 99.9% or more, or 100% of a single gas). In preferred embodiments the gas hydrates are CO₂ or N₂ hydrates. In some embodiments the gas hydrate comprise more than 1 gas.

For example, a CO₂ hydrate may be formed in a 25 wt% sugar solution at about 6°C and about 30 bar, or in a 50 wt% sugar solution at about 4°C and about 30 bar. A CO₂ hydrate may also be formed in a 25 wt% sugar solution at about -3.5°C and about 10 bar.

They optionally include conditions in which water ice forms and/or in which the gas condenses to form a liquid gas phase. For example, -2.04°C is about the freezing point depression for a 25 wt% sugar solution, so lower temperatures can/or should not be used for forming gas hydrates in such a 25 wt% sugar solution depending on the application. For example, the second quadruple point (the point where liquid, hydrate, vapor and condensed gas phases meet) is about 8.5°C and 43.4 bar for the 25 wt% sugar solution-CO₂ system. Therefore, CO₂ will be a liquid at lower temperatures and/or higher pressures. The temperature and gas pressure can be varied depending on the desired viscosity and/or desired gas concentration of the 3S sugar solution-based slurry.

They optionally include conditions in which water ice forms and/or in which the gas condenses to form a liquid gas phase. For example, -2.04°C is about the freezing point depression for a 25 wt% sugar solution, so lower temperatures can/or should not be used for forming gas hydrates in such a 25 wt% sugar solution depending on the application. For example, the second quadruple point (the point where liquid, hydrate, vapor and condensed gas phases meet) is about 8.5°C and 43.4 bar for the 25 wt% sugar solution-CO₂ system. Therefore, CO₂ will be a liquid at lower temperatures and/or higher pressures. The temperature and gas pressure can be varied depending on the desired viscosity and/or desired gas concentration of the 3S sugar solution-based slurry.

The temperature and pressure required to form gas hydrates are interdependent and will vary depending on the gas and the solution (e.g. the wt% of solids in the sugar solution). Exemplary condition ranges for forming CO₂ hydrates in a 25 wt% sugar solution are 1-7°C and 20-40 bar, or about 20 bar or more. Exemplary condition ranges for forming N₂ hydrates in a 30 wt% sugar solution are -2.5°C to 5.5°C and 140 to 285 bar. Exemplary condition ranges for forming N₂O hydrates in a 25 wt% sugar solution are about 0 to 9°C at 12 to 38 bar. To form hydrates at lower pressures, lower temperatures must be used.

In some embodiments the gas hydrates are formed by a first gas prior to introducing one or more further gases. Thus, the final gas hydrates may contain two or more gases i.e. are mixed gas hydrates. For example, in mixed CO₂/N₂ hydrates CO₂ allows N₂ to get embedded at lower pressures by leaving small hydrate cages unoccupied. First the CO₂ hydrate may be prepared at lower pressures, then N₂ may be added at higher pressures. Similar methods may be used for any combination of suitable gases. In preferred embodiments the gas hydrates are mixed CO₂/N₂ hydrates. The molar fraction of CO₂ trapped in the CO₂/N₂ hydrates may be from 0.1 to 0.99, or from 0.5 to 0.99, or from 0.8 to 0.99, or from 0.9 to 0.99, or from 0.95 to 0.99, or about 0.97. In other embodiments the gas hydrates are N₂O/N₂ hydrates (Yang, Y., et al., 2017. Environmental science & technology, 51(6), pp.3550-3557) or N₂O/CO₂ hydrates or N₂O/CO₂/N₂ hydrates.

In preferred embodiments CO₂ hydrates (or alternatively N₂O or CO₂/N₂O hydrates) are formed prior to introduction of nitrogen gas. For example, the CO₂ hydrates may be formed with carbon dioxide introduced at 10-50 bar, 15-25 bar, or about 20 bar and at 0 to 5°C or about 2°C (e.g. 1-2°C and about 20 bar or more, or 20-30 bar). Once a small amount of CO₂ hydrates form (as shown by a drop in pressure and an exothermic peak on the temperature profile), nitrogen may be introduced to increase the total gas pressure. The amount of nitrogen introduced (i.e. the CO₂:N₂ ratio) and the required pressure will vary depending on the desired ratio of CO₂/N₂ in the gas hydrates. The total gas pressure may be increased to above 10-300 bar, 20-50 bar, 30-40 bar or about 35 bar, at -5°C to 5°C, at 0 to 5°C or about 2°C. The molar fraction of CO₂ (in the final gas mix) for forming the mixed CO₂/N₂ hydrates may be from 0.1 to 0.9, or from 0.2 to 0.8, or from 0.4 to 0.6, or from 0.47 to 0.54, or about 0.54. The fraction of CO₂ (in the final gas mix) should be such that CO₂ does not condense. For example, CO₂ will condense at about 8.5°C and 43.4 bar for the 25 wt% sugar or lower temperatures and/or higher pressures.

As described above, the temperature and pressure required to form gas hydrates are interdependent and will vary depending on the gas and the composition of the aqueous solution used for the formation of the gas hydrate slurry comprising gas hydrates (e.g. the wt% of solids in the sugar solution) and the colligative properties of the solution comprising water (e.g. the freezing point depression).

To dissociate the gas hydrates present on the gas hydrate/ fluid matrix mix, pressure must be decreased and/or temperature must be increased moving the system outside the stability region of given gas (or gas mixture) hydrate's phase diagram. Consequently, no gas hydrates may be present in the foamed sugar solution prior to drying, or in the dried sugar mixture, or in the porous sugar powder.

### Sugar Solution-based Slurry comprising gas hydrates (3S slurry)

A "sugar solution" according to the present invention is a Matrix Fluid (MF) comprising soluble sugar components. More complex Matrix Fluids may also comprise non-soluble components and/or such components in dispersion (suspension or emulsion). Another class of Matrix Fluids is oil-based and contains watery drops (W/O-emulsion type) as disperse phase with such drops containing the added 3S slurry or consisting of such.

An exemplary and representative sugar solution or such sugar solution-based slurry (3S) for use in the present invention may originate from different sugar sources. At the same time the sugar solution stands representative for any solution-based water continuous or disperse fluid system in which various soluble components can be contained and thus, depending on their concentration and possible interaction potential between each other as well as with the water and the gas molecules may impact on the temperature/pressure ranges in which gas hydrates can be formed.

The present invention provides a method for producing a representative sugar solution-based slurry (3S) comprising gas hydrates. The method comprises:
(a) providing a sugar solution;
(b) cooling the sugar solution; and
(c) pressurizing the sugar solution with gas, to provide a 3S sugar slurry comprising gas hydrates, wherein the gas comprises air and/or one or more of carbon dioxide, nitrogen, nitrous oxide and argon, preferably carbon dioxide and/or nitrogen.

The method may further comprise a step of distributing the gas hydrate in the sugar slurry. The gas hydrate may be distributed during and/or after formation. Preferably the gas hydrate is distributed by mixing the 3S sugar slurry e.g. by using a dynamic or static mixer device for effective mixing. The gas hydrate may also be mixed in a scraped surface heat exchanger (SSHE) and/or through a pump conveying action.

The sugar solution may be any suitable sugar solution (or the-like), for example a sugar solution suitable for producing a porous sugar powder (possibly also containing other soluble or non-soluble components) . Preferably the sugar solution comprises 10 wt% to 65 wt%, 10 wt% to 50 wt%, 20 wt% to 40 wt%, 25 wt% to 35 wt%, 30 wt% to 35 wt%, or about 30 wt% solids. Preferably the sugar solution has a viscosity of between 10⁻² and 100 Pas, or 10⁻² and 10 Pas, or 10⁻² and 10⁻¹ Pas, or between 20 and 100 mPas, or between 20 and 60 mPas, or about 20 mPas or more and/or about 100 mPas or less. The viscosity will be interdependent on the wt% of solids, i.e. a higher wt% will result in a higher viscosity (see Figure 4). For instance, a 60 wt% sugar solution may have a viscosity of around 2.3 Pas at 30 bar, 7°C and 100s⁻¹ shear rate, whilst a 30 wt% sugar solution may have a viscosity of around 14-16 mPas at 30 bar, 7°C and 100s⁻¹ shear rate. The viscosity may be determined by any method known for instance by a rheometer.

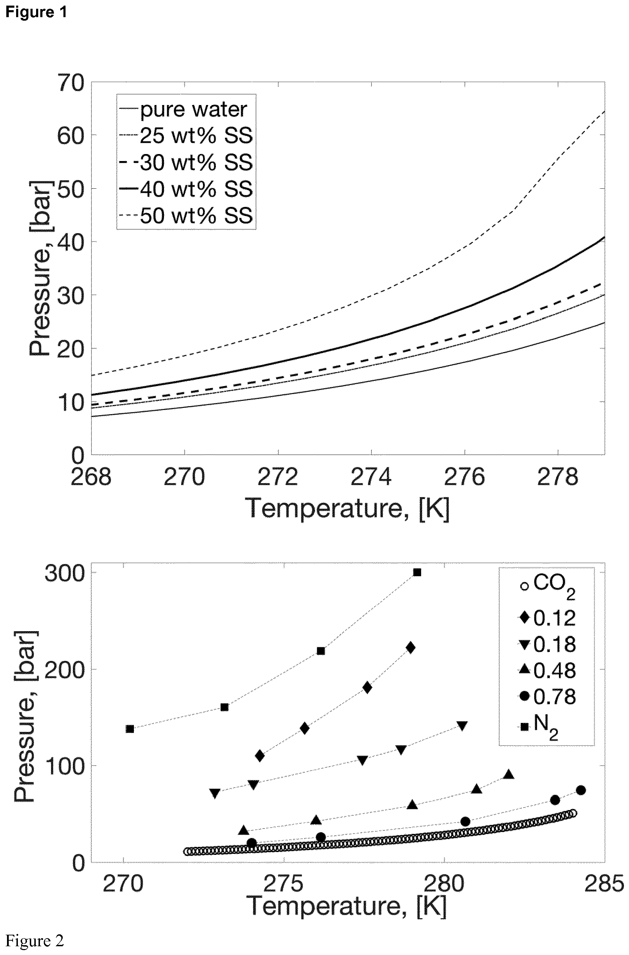

The temperature and pressure required to form gas hydrates are interdependent and will vary depending on the gas and the solution (e.g. the wt% of solids in the 3S solution). For example, Figure 1 provides a phase diagram for formation of CO₂ hydrate in a sugar solution. Conditions in which ice forms and/or in which the gas condenses should be avoided. For example, a 25wt% sugar solution has a freezing point of about -2.04°C and a 50 wt% sugar solution has a freezing point depression at -7.61°C.

For example, the sugar solution within which the gas hydrates shall be generated may be cooled to between -10°C and 8°C, or to between -8°C and 7°C, or to between -5°C and 5°C, or to no lower than about -7.5°C, -5°C or -2°C or now lower than -1°C, depending on the gas, sugar concentration in solution and gas pressure. The gas pressure for gas hydrate formation may be from 10 to 300 bar, 10 to 100 bar, 10 to 50 bar, or from 15 to 40 bar, or from 15 to 35 bar, or from 15 to 30 bar, depending on the gas, sugar solution and temperature. Preferably, when a CO₂ hydrate is desired a 25 wt% sugar solution is cooled to 3-5°C and pressurised with CO₂ to about 20-30 bar, or 20 bar or more. Preferably, when a N₂ hydrate is desired then a 25 wt% sugar solution is cooled to -2.5°C to 5.5°C and pressurised with N₂ to 135 to 285 bar. To form hydrates at lower pressures, lower temperatures must be used. Preferably, when a CO₂/N₂ mixed hydrate is desired the solution is cooled to about 2°C and pressurised to about 20 bar with CO₂, prior to pressurising to about 35 bar with N₂ (and a molar fraction of CO₂ of about 0.54). Alternatively, when a CO₂/N₂ mixed hydrate with a high amount of N₂ is desired the solution is cooled to about 2°C and pressurised to about 20 bar with CO₂, prior to pressurising to about 100 to 200 bar with N₂ (and a molar fraction of CO₂ of about 0.1 or less).

The 3Sslurry comprising gas hydrates according to the present invention may be made of a sugar solution comprising 10 wt% to 65 wt%, 10 wt% to 50 wt%, 20 wt% to 40 wt%, 25 wt% to 35 wt%, 30 wt% to 35 wt%, or about 25 wt% solids.

The 3S slurry comprising gas hydrates may have a viscosity of between 10⁻² and 10 Pas or between 20 to 1 Pas or between 30 mPas and 500 mPas or about 30-40 mPas and/or about 300 mPa or more.

The viscosity of the sugar solution may be increased by formation of the gas hydrates. Thus, the formation of the gas hydrates may be monitored by measuring the viscosity of the 3S slurry. Preferably the viscosity of the 3S slurry is greater than the solution provided without contained gas hydrates, for example 1-8 times greater. The viscosity may be determined by any method known, for example by a rheometer or a viscometer.

The 3S slurry may comprise one or more of carbon dioxide, nitrogen, nitrous oxide and argon, oxygen preferably carbon dioxide and/or nitrogen. The sugar slurry may comprise 0.01-7.5 mol/L, 0.1-7.5 mol/L, 1-5 mol/L, 1-3 mol/L, or about 1-2mol/L of gas. In some preferred embodiments the 3S slurry comprises carbon dioxide, preferably 0.5-5 mol/L, 1-5 mol/L, 1-2 mol/L, or about 1.4 mol/L. In some other preferred embodiments the 3S slurry comprises carbon dioxide, preferably 0.5-5 mol/L, 0.5-2 mol/L, or about 1 mol/L; and nitrogen, preferably 0.01-0.5 mol/L, 0.02-0.1 mol/L, or about 0.05 mol/L. The amount of gas refers to the total amount of gas in the 3S sugar slurry, i.e. in both the hydrate fraction and in the liquid fraction. The amount of gas may be measured by any method known to those skilled in the art, for example chromatography, FBRP, optical methods, piezo electrical sensors, impedance, or conductance measurements.

The 3S sugar slurry may have a ratio of gas in the hydrate fraction to gas in the liquid fraction (H:L) of from 5:1 with volumetric hydrate fractions of 10 to 35 vol%, or from 3:2 at volumetric hydrate fractions of 12 to 14 vol%, or 1.2:1 at 10 vol% hydrate, preferably 2:1 at 17 vol% gas hydrate fraction. The H:L ratio may be determined by any method known to those of skill in the art such as high-pressure chromatography, scattering or spectroscopy or thermodynamic modeling. Preferably, the majority of the gas is trapped in the gas hydrates.

### Method of producing a porous powder

The present invention provides a method for producing a dried, frozen or freeze dried porous powder mixture. The method comprises:
(a) mixing a sugar slurry comprising gas hydrates (3S) and a another liquid to semi-liquid Matrix Fluid (MF, solution or dispersion) to provide a mixed 3SMF fluid system;
(b) releasing the pressure and/or increasing the temperature of the 3SMF fluid system to provide a 3SMF foam;
(c) Fixing the 3SMF foam by drying, freezing or freeze-drying, to provide either (i) a frozen or (ii) a dried porous 3SMF product
(d) additional grinding provides a porous powder.

Advantageously, mixing gas into a sugar solution in a solid form (e.g. as a gas hydrate) facilitates the mixing of the gas in the sugar solution and/or decreases the length of time required to gasify the solution and/or reduces the energy required to gasify the solution.

In the method for producing a porous dry sugar powder according to the present invention, the 3S sugar solution-based slurry may be produced by a method herein described. The 3S slurry may be produced in a side stream.

In the method for producing a porous dry powder according to the present invention, the initial sugar solution may be produced by any method known. Such initial sugar solution does not comprise gas hydrates. The initial sugar solution may comprise 10 wt% to 65 wt%, 30 wt% to 65 wt%, 50 wt% to 65 wt%, 55 wt% to 65 wt%, 60 wt% to 65 wt%, or about 60 wt% solids. Preferably such initial sugar solution, may comprise about 25 wt% sugar solids with a viscosity of around 15-20 mPas at 30 bar, 7°C and 100s⁻¹ shear rate. Upon gas hydrate generation thus forming the 3S slurry the viscosity increases since the gas hydrates form a crystalline disperse phase. The 3S fluid is preferably adjusted close to the viscosity of the matrix fluid (MF) system into which it is mixed for foam generation, because the mixing efficiency is facilitated by equal viscosities of the two fluid to be mixed. Respective viscosity levels range between 10⁻² and 100 Pas, or 10⁻² and 10 Pas, or 10⁻² and 1 Pas, or between 20 and 100 mPas, or between 20 and 60 mPas, or about 20 mPas or more and/or about 100 mPas or less. The viscosity of the matrix fluid (MF) will depend on its base fluid viscosity and the concentration of dissolved and/or dispersed components. The viscosity of the 3S slurry will be interdependent on the wt% of sugar solids, i.e. a higher wt% will result in a higher viscosity and the fraction of gas hydrate crystals generated.

In a special case of the inventive embodiment the 3S slurry and the matrix fluid (MF) will be of similar nature (e.g. sugar solution based). In such case the MF may contain e.g. 60 wt% of dissolved sugar whereas the 3S slurry is based on a 30 wt% containing sugar solution which upon a 10-15 vol% gas hydrate crystal fraction formation can reach a comparable viscosity with the gas hydrate free MF fluid, which then facilitates the mixing of 3S and MF thus efficiently reaching a homogeneous 3SMF mixed fluid system, ready for foaming under temperature increase and /or static pressure release.

The viscosity may be determined by any method known, for instance by a rheometer. Preferably the viscosity is determined at a shear rate of 100 _{S}⁻¹ and a temperature of 1°C.

The 3S slurry (side stream) and the MF fluid (main stream) may be mixed by adding the 3S slurry to the MF fluid, i.e. by dosing the 3S side stream into the MF main stream. The mixing of the 3S side stream into the MF main stream produces the 3SMF mixed fluid system. Preferably 3SMF fluid remains in the main stream at the end of mixing. In some embodiments the 3S side stream rate is 5-200 ml/min, or 10-100 ml/min, or about 15 ml/min and the MF main stream rate is 15-1000 ml/min or 100-200 ml/min, or about 170 ml/min. For example, when the 3S sugar slurry comprises a CO₂ hydrate the 3S side stream may be added at a rate of 10-20 ml/min into a 150-200 ml/min MF main stream. In some embodiments the ratio of the side stream rate : main stream rate is less than 1, or 0.01 to 0.5, or 0.05 to 0.1, or about 0.04-0.05

In some embodiments the 3S slurry is added to the MF by dosing (i.e. by adding a specific amount (volume) of the 3S slurry at discrete time intervals). In some embodiments the amount (volume) of 3S slurry added is 1 to 1000cm³, 1 to 100cm³, 1 to 50 cm³, 10 to 50 cm³, or 5 to 20 cm³, or about 15 cm³. In some embodiments such 3S dose is added every 1 to 1000 seconds, or every 5 to 200 seconds, or every 60 to 100 seconds. In some embodiments 10 to 50 cm³ is added every 60 to 100 seconds.

In some embodiments the amount (volume) of 3S added and/or the rate is sufficient to provide 0.001 to 1 mol/min, or 0.02 to 0.1 mol/min of gas to the MF. For example, when the 3S comprises a CO₂ hydrate the volume of slurry added to the MF and the rate may be such that 0.02 to 0.1 mol/min of CO₂ is provided; and when the 3S comprises a CO₂/N₂ hydrate the volume of slurry added and the rate may be such that 0.02 to 0.1 mol/min of CO₂ and 0.001 to 0.005 mol/min of N₂ is provided.

In some embodiments the 3S (side stream) and the MF (main stream) are mixed and/or the side stream is added to the main stream under close to (i.e. approximately or about) isobaric-isothermal conditions, preferably isobaric-isothermal conditions. "Isobaric-isothermal conditions" according to the present invention are those in which mixing is at a constant temperature and constant static pressure. Preferably the isobaric-isothermal conditions are the same as the conditions of the 3S (side stream) prior to mixing, i.e. the isobaric-isothermal conditions refer to the pressure and temperature at the inlet where the 3S side stream enters the MF main stream. Approximately isobaric-isothermal conditions may be within ±2°C and ±5 bar of isobaric-isothermal conditions. Preferably the temperature and gas pressure are suitable for the formation and/or retention of the gas hydrates, as described above. Accordingly, the temperature may be between -10°C and 10°C, or between 0°C and 10°C, or between 0°C and 5°C, or about 2°C, depending on the gas, sugar solution and gas pressure, and/or the gas pressure may be from 10 to 300 bar, 10 to 100 bar, 10 to 50 bar, from 15 to 40 bar, or from 15 to 35 bar, or from 15 to 30 bar, depending on the gas, sugar solution and temperature. As described above, the skilled person will know that the temperature and pressure required to form and/or retain gas hydrates are interdependent and will vary depending on the gas and the solution (e.g. the wt% of solids in the sugar solution). In preferred embodiments the 3S and the MF streams are mixed at about 20-30 bar, or about 20 bar or more pressure and/or 1-2°C (wherein the 3S comprises a CO₂ hydrate). In other embodiments the 3S and the MF are mixed at about 135 to 155 bar pressure and/or about -2.5°C to 2.3°C (wherein the 3S comprises a N₂ hydrate). In preferred embodiments the 3S and the MF are mixed at about 35 bar CO₂/N₂ total gas pressure and/or 1-5°C, or about 3°C (wherein the 3S comprises a CO₂/N₂ mixed hydrate). In some embodiments the 3S (side stream) and the MF (main stream) are mixed under the same temperature and/or pressure used to produce the 3S comprising gas hydrates.

According to the present invention, the 3SMF is preferably a foamed solution or dispersion after mixing of the 3S and the MF. Preferably the mixing continues until the 3SMF (i.e. foamed sugar containing solution / dispersion) reaches an overrun of from 50 to 1000%, or from 100 to 500%, or from 100 to 200%, or from 100 to 150%, or from 150% to 200%. In some embodiments after reaching the desired overrun (e.g. 50 to 1000%, or from 100 to 500%, or from 100 to 200%, or from 100 to 150%, or from 150% to 200%) the 3S side stream (sugar solution-based slurry) is added continuously at a constant dosing rate to the main stream MF to maintain the desired overrun, for example at a dosage rate sufficient to provide 0.001 to 1 mol/min, or 0.02 to 0.1 mol/min of gas to the MF in the main stream. In some embodiments the mixing continues until the 3SMF mix comprises 0.01-7.5 mol/L, 0.1-7.5 mol/L, 0.5-2 mol/L, or about 1 mol/L of gas.

In some embodiments the method comprises an additional step of releasing the pressure and/or increasing the temperature of the 3SMF to provide a foamed liquid product stream. Preferably this step decomposes the gas hydrates and releases the gas into the 3SMF. As described above, the skilled person will know that the temperature and pressure required to decompose gas hydrates are interdependent and will vary depending on the gas and the solution (e.g. the wt% of solids in the MF). The gas pressure and temperature will thus depend on the identity of the gas hydrates. The gas pressure may be released. In some embodiments, the gas pressure may be lowered to between 1 bar and 10 bar, or to between 5 bar to 10 bar. The temperature may be increased (optionally in combination with lowering the gas pressure). In some embodiments the temperature of the 3SMF may be increased to between -5°C and 10°C, between -5°C and 5°C, between 0°C and 10°C, between 0°C and 5°C, above about 0°C, or about 5°C. Preferably the gas pressure is released (i.e. the temperature is not increased). For example, for CO₂ (or mixed CO₂) hydrates in a 25 wt% sugar solution the gas pressure may be lowered below about 20 bar (e.g. 1-15 bar, 1-10 bar, or 1-5 bar) at a temperature of 1-2°C. For example, for N₂ hydrates in a 25 wt% sugar solution the gas pressure may be lowered below about 135 bar (e.g. 1-100 bar, 1-50 bar, 1-20 bar) at a temperature of -2.5°C to 2.3°C.

In some embodiments the method comprises an additional step of reducing the temperature of the 3SMF(or foamed mixed fluid system) prior to drying. Preferably the temperature is reduced to between -5°C and -15°C or about -10°C. Advantageously this step prepares the solution for freeze drying. Preferably this step is prior to fast-freezing of the foamed 3SMF.

In some embodiments the method of producing the porous powder may comprise an additional step of fast-freezing the 3SMF (or foamed coffee solution), prior to drying, to provide a stabilized foamed coffee solution. The fast-freezing may stabilize the foam microstructure of the second coffee solution (foamed mixed fluid system) by avoiding any further gas bubble expansion or coalescence. Any fast-freezing method known to those of skill in the art may be used. In some embodiments the 3SNF is kept at -100°C to -20°C, or -80°C to -40°C, or -80°C to -65°C, preferably about -60°C after fast-freezing. In some embodiments the step of fast-freezing is prior to an additional step of further releasing the pressure. For example, the method may comprise releasing the pressure to provide a foamed 3SMF (e.g. 15 to 25 bars), followed by a step of fast-freezing (e.g. stabilisation with liquid nitrogen), followed by a further release of pressure (e.g. to 1 bar).

In the step of drying the foamed 3SMF, any method known to those of skill in the art may be used, for example spray- or freeze- drying. In some embodiments the step of drying the 3SMF is freeze-drying. Preferably, the freeze-drying reduces and/or avoids rapid sublimation of water in the system, thereby reducing and/or avoiding coalescence of small gas pockets. Suitable freeze-drying methods to reduce and/or avoid rapid sublimation of water will be well known to those of skill in the art. In some embodiments the drying rate is 1°C/hour until the 3SMF reaches 0°C, preferably wherein the initial temperature of the 3SMF is -60°C to -20°C, preferably about -40°C.

In the step of grinding the foamed and dried 3SMF, any method known may be used. The step of grinding the foamed and dried 3SMF may further comprise a step of sieving the resulting foamed and dried 3SMF powder (following in short: 3SMF powder) . After grinding (and optionally sieving) the 3SMF powder may for example consist of granules that have an average diameter of greater than 0.5 mm and/or less than 4 mm. Preferably, the 3SMF powder granules may have an average diameter of about 3 mm.

Thus, in some embodiments the method for producing a 3SMF powder comprises:
(a) mixing a 3S comprising gas hydrates and a MF to provide a 3SMF;
(b) releasing the pressure of the 3SMF to provide a foamed 3SMF;
(c) optionally reducing the temperature of the foamed 3SMF;
(d) fast freezing the foamed 3SMF to provide a stabilized foamed 3SMF;
(e) optionally further releasing the pressure;
(f) drying the stabilized foamed 3SMF, preferably freeze-drying, to provide a dried foamed 3SMF; and
(g) grinding the dried, foamed 3SMF , to provide a porous 3SMF powder.

"Porosity" of a porous powder is a measure of the void spaces (pores) and is a fraction of the volume of pores over the total volume of the porous powder, with values of between 0 and 1, or as a percentage between 0% and 100%.

"Closed porosity" is the fraction of the total volume of closed pores in the porous powder. "Open porosity" is the fraction of the total volume of open pores in the porous powder.

The size of pores in the porous powder is given by a "pore size distribution". The pore size distribution may be defined by the incremental volume as a function of pore diameter and/or defined by the number of pores as a function of pore diameter.

The size of closed pores in the porous powder is given by a "closed pore size distribution". The closed pore size distribution may be defined by the incremental volume as a function of closed pore diameter and/or defined by the number of closed pores as a function of closed pore diameter.

The porosity, closed porosity, open porosity, pore size distribution, and closed/open pore size distribution can be measured by any means known in the art. For example, they can be measured by standard measurements such as mercury porosimetry, x-ray tomographic techniques, SEM and/or methods described in the Examples.

In some embodiments the porous powder according to the present invention has a total porosity (closed and open) of 10% to 95%, or 50% to 90%, or 70% to 85%, or about 80%..

In some embodiments the porous powder according to the present invention has a closed porosity of 10% to 90%, 15% to 50%, or 20% to 35%, or 20% to 34%, or 25% to 34%, or 30% to 34%, or about 25%, 26%, 27%, 28%, 29%, 30%, 31%, 32%, 33%, 34% or 35%, preferably about 30%, preferably wherein the closed pores were formed from a 3S slurry comprising mixed CO₂/N₂ or N₂O hydrate). In some other embodiments the powder of the present invention has a closed porosity of 10% to 20%, preferably wherein the closed pores were formed from a 3S comprising CO₂ hydrate.

In some embodiments the porous powder of the present invention has a bimodal pore distribution. A bimodal pore distribution is a continuous pore size distribution with two different modes.

Advantageously, the larger and open pores in porous powders are beneficial for the easy and fast reconstitution of the sample making powder accessible for water or other fluids' penetration. Advantageously, the smaller pores in the porous powder are beneficial for generation of small gas bubbles / foam structure from the reconstituted porous powder.

The terms "comprising", "comprises" and "comprised of' as used herein are synonymous with "including" or "includes"; or "containing" or "contains", and are inclusive or open-ended and do not exclude additional, non-recited members, elements or steps. The terms "comprising", "comprises" and "comprised of' also include the term "consisting of'.

As used herein the term "about" means approximately, in the region of, roughly, or around. When the term "about" is used in conjunction with a numerical value or range, it modifies that value or range by extending the boundaries above and below the numerical value(s) set forth. In general, the term "about" is used herein to modify a numerical value(s) above and below the stated value(s) by 10%.

### EXAMPLES

### Example 1 - Characterisation of gas hydrate formation in exemplary sugar solutions

### Gas solubility in coffee solutions

Gas solubility in sugar solutions was assessed experimentally with a tempered high-pressure vessel reactor and a pressure sorption decay method. The experiments were performed at 5°C and 10°C at 10, 20, 30 for 25 wt% sugar solutions. The initial loading was 100 ml of the 25 wt% sugar solution. The amount of gas was measured with a Coriolis flow meter.

Table 1 show the experimental results for CO₂ solubility in sugar solutions. Values for arbitrary sugar concentrations were evaluated with a thermodynamic UNIFAC model for sucrose solutions based on Catté et al. (1995) and Gros et al. (1999).

**Table 1 - Comparison of CO₂ solubilities as molar fractions of CO2 (xCO2) in the 25 wt% sugar solution**

| **System** | **Temp. tested** | **Solubility at 30 bar** | **Solubility at 20 bar** | **Solubility at 10 bar** |
|---|---|---|---|---|
| Sugar solution 25 wt% | 5°C | 0.015 | 0.012 | 0.008 |
| Sugar solution 25 wt% | 10 °C | 0.012 | 0.001 | 0.0065 |

### Sugar-CO₂ and sugar-N₂ phase diagrams

Figure 1a shows the resulting equilibrium hydrate existence boundaries for the 25 wt% sugar solution/CO₂ systems resulting from a thermodynamic model, which was validated using a pressure-temperature analysis in a small scale high-pressure stirred reactor and differential scanning calorimetry.

Figure 1b includes a phase diagram for mixed hydrates with CO₂/N₂ guests in water adapted from literature (Kang, S.P., et al., 2001. The Journal of Chemical Thermodynamics, 33(5), pp.513-521). The boundary lines are represented for various CO₂/N₂ ratios, which lie between the boundaries for single CO₂ (2-digit pressure values in bar) and N₂ hydrates (3-digit pressure values in bar).

### Rheology of sugar solutions

The viscosity of sugar solutions of 25 and 50 wt% were measured without the presence of gas hydrates and after gas hydrate formation using a bench-top rheometer and using pipeline rheometry. The 25 wt% sugar solutions were measured with a Couette and Pin geometry at 0-4°C at 30 to 35 bar. The experiments were and resulted in viscosities of 9 mPas with gas hydrates and 4-5 mPas for 25 wt % saturated sugar solutions without gas hydrates. The flow meter measured viscosities ranging from 7-8.9 mPas for the 25 wt% sugar solutions containing gas hydrates (see figure 2).

To increase mixing power and gas hydrate nucleation ,the 50 wt % sugar solutions were measured with a vane geometry. Sugar solutions containing gas hydrates ranged from 60-390 mPas in a temperature range of -1 to 3°C and 50-90 mPas on the flow meter at 2.5°C (see figure 2).

The sugar solutions were Newtonian before the gas hydrate appearance, where they became shear thinning fluids.

### Example 2 - Production of sugar solution-based slurries (3S) comprising gas hydrates

For producing 3S slurries comprising gas hydrates, the high pressure clathrate hydrate slurry generator (CLAG) reactor was loaded with 3 L of 25 or 50 wt% sugar solution (SS) and cooled down to around 4 to 7°C (for the 25 wt% SS) or around 2.5°C (for the 50 wt% SS). The GLAG reactor was then pressurized to 30-35 bar (or 400-600 g CO₂). During pressurization, the SSHE unit was spun at 800 rpm and the pump at 40 to 50 Hz (up to 330 L·h⁻¹). After supersaturation was achieved, gas hydrates were formed after at a certain time. This time, when gas hydrates first appeared is called the induction point. After the induction point, the gas hydrates entered the growth phase. This was indicated by a pressure drop and an exothermic increase on the temperature curve. The initiation of the growth was also observed as an increase in viscosity and decrease of slurry density, as the hydrogen bonded water cages were being occupied by gas molecules.

Highly viscous initial sugar solutions were desirable to reduce the amount of water for specific foaming applications. However, higher viscosity slurries with e.g. 60-65 wt% (250-800 mPas) were difficult to pump. Furthermore, the higher sugar concentrations bounded more water increasing the inhibition effect for gas hydrate formation. When led to longer induction times at 4-7°C and so the gas hydrate formation temperature was decreased to 2.5°C for the 50 wt% SS. After gas hydrate formation however, the highly concentrated sugar solutions containing gas hydrates were prone to blockages as the solid content increased. Thus, the 25 wt% sugar solution was chosen for the transfer experiments.

### CO₂:N₂ hydrate sugar slurries

For the trials, where gas hydrates were formed with CO₂ and N₂, ratios of up to 0.64 CO₂:N₂ were tested. CO₂ ratios between 0.47 and 0.54 had a homogeneous flow profile after gas hydrate formation and were easy to handle. After forming a small amount of gas hydrates with the CO₂ at pressures around 20 bar, N₂ was added by pressurizing to 35 bar of pressure assuming the non-occupied hydrogen bonded cages could be further filled up by smaller N₂ molecules.

### High-pressure CLAG reactor conditions for transfer trials

Figure 5 and Table 4 show the density and viscosity trends in the high-pressure CLAG reactor trials, with increasing viscosity and decreasing density after gas hydrate appearance for CO₂ and CO₂:N₂ hydrate coffee slurries.

**Table 4 - Comparison of 30 wt % sugar gas hydrate slurries. The pressure and temperatures in the last row are given for the condition before the gas hydrate slurry transfer into the EGLI main stream line. The pressure on the high-pressure CLAG reactor for the CO₂/N₂ experiments before the nitrogen injection was around 19 bar. H stands for hydrate, p for pressure, T for temperature.**

| **System** | **sugar CO₂** | **sugar CO₂/N₂=0.54** |
|---|---|---|
| η at atm. p, at 500s⁻¹ | 14.5 mPas at 7°C | 14.5 mPas at 7°C |
| η CO₂ sol. | 29.7±7 mPas | 14±1 mPas |
| ρ CO₂ sol. | 0.94 kg/L | 1.034 kg/L |
| η with CO₂ H | 59.8±6.5 mPas | 14.6±1.6 mPas |
| ρ with CO₂ H | 0.819 kg/L | 1.034 kg/L |
| η with CO₂/N₂ H | - | 24±3 mPas |
| ρ with CO₂/N₂ H | - | 0.913 kg/L |
| at p, T | 30 bar, 5.5°C | 35 bar, 2.8°C |
| induction time | 1800±300 s | 3400±300 s |

## Claims

1. Use of gas hydrates for producing a foam or porous powder.

2. Use of gas hydrates for gasifying a viscous liquid.

3. Use according to claim 1 or 2, wherein the gas comprises air and/or one or more of carbon dioxide, nitrogen, nitrous oxide, oxygen, noble gases, hydrocarbons, propane, ethylene, methane and nitrous oxide or mixtures thereof, preferably carbon dioxide and/or nitrogen or mixtures thereof.

4. A method of producing a water phase continuous slurry comprising gas hydrates, comprising:
(a) providing a watery solution with soluble components generating a freezing point depression;
(b) cooling the watery solution; and
(c) pressurizing the watery solution with gas, to provide a slurry comprising gas hydrates, wherein the gas is air and/or comprises one or more of carbon dioxide, nitrogen, nitrous oxide, oxygen, noble gases, hydrocarbons, propane, ethylene, methane and nitrous oxide or mixtures thereof, preferably carbon dioxide and/or nitrogen or mixtures thereof.

5. A method according to claim 4, wherein the solution is cooled to between -10°C and 8°C, or to between -8°C and 7°C, or to between -5°C and 5°C, or to no lower than about -5°C and/or the gas pressure is from 10 to 300 bar, or from 15 to 100 bar, or from 15 to 35 bar, or from 15 to 30 bar.

6. A method according to claim 4 or 5, wherein the method comprises cooling the solution to between 0 and 5°C, or to about 3°C; and pressurizing the solution with carbon dioxide, preferably at 15-25 bar, or about 20 bar, prior to pressurizing the solution with nitrogen, preferably at 30-285 bar or about 35-50 bar or about 35 bar.

7. A method according to any one of claims 4-6, wherein the method further comprises a step of distributing the gas hydrate in the solution.

8. A solution- or dispersion-based slurry comprising gas hydrates, wherein the gas is air and/or comprises one or more of carbon dioxide, nitrogen, nitrous oxide, oxygen, noble gases, hydrocarbons, propane, ethylene, methane and nitrous oxide or mixtures thereof, preferably carbon dioxide and/or nitrogen or mixtures thereof.

9. A method according to claim 4-7, or a solution- or dispersion-based gas hydrate slurry according to claim 8, wherein the slurry comprises carbon dioxide, preferably 0.01-7.5 mol/L, 0.1-7.5 mol/L, 1-5 mol/L, 1-3 mol/L, or about 1-2mol/L of carbon dioxide, or about 1.4 mol/L; and/or nitrogen, preferably 0.01-0.5 mol/L, 0.02-0.1 mol/L, or about 0.05 mol/L of nitrogen.

10. A method according to claim 4-7, 9 or a solution- or dispersion-based gas hydrate slurry according to claim 8 or 9, wherein the slurry has a ratio of gas in the hydrate fraction to liquid fraction (H:L) of about 5:1 with volumetric hydrate fractions of 10 to 35 vol%, or from 3:2 at volumetric hydrate fractions of 12 to 14 vol%, or about 1.2:1 at about 10 vol% hydrate, or about 2:1 at about 17 vol% gas hydrate fraction.

11. A method according to claim 4-7, 9, 10 or a solution- or diespersion based slurry according to claims 8-10, wherein the slurry comprises 10 wt% to 65 wt%, 10 wt% to 50 wt%, 20 wt% to 40 wt%, or about 25 wt% solids.

12. A method according to claim 4-7, 9-11, or a solution- or dispersion-based slurry according to claim 8-11, wherein the slurry has a viscosity of between between 10⁻² and 10 Pas or between 20 to 1 Pas or between 30 mPas and 500 mPas or about 30-40 mPas.

13. A method of producing a liquid/semi-liquid foam or solid or porous powder comprising:
(a) mixing (1) a solution- or dispersion-based slurry comprising gas hydrates and (2) a matrix fluid system being of solution or dispersion nature to provide a homogeneous fluid mixture from (1) and (2).
(b) releasing the pressure and/or increasing the temperature of the homogeneous fluid mixture from (1) and (2).to provide a foamed (1+2) mixed fluid system of liquid to semi-liquid consistency;
(c) drying the foamed (1+2) mixed fluid system, preferably by freeze-drying or microwave assisted vacuum drying, to provide a dried porous (1+2) mixed solid; and
(d) grinding the dried porous (1+2) mixed solid, to provide a porous powder.

14. A method according to claim 13, wherein the solution- or dispersion-based slurry is produced by a method according to any one of claims, 4-7, 10-12, or is a solution-or dispersion-based slurry comprising gas hydrates, according to any one of claims 8-12.

15. A method according to claim 13 or 14, wherein the matrix fluid system does not comprise gas hydrates

16. A method according to any one of claims 13-15, wherein the matrix fluid system comprises 10 wt% to 75 wt%, 30 wt% to 70 wt%, 50 wt% to 70 wt%, 55 wt% to 65 wt%, 60 wt% to 65 wt%, or about 60 wt% solids.

17. A method according to any one of claims 13-16, wherein the solution- or dispersion-based slurry is added to the matrix fluid system under approximately isobaric-isothermal conditions, preferably wherein the approximately isobaric-isothermal conditions are a temperature of between -10°C and 10°C, or between 0°C and 10°C, or between 0°C and 5°C, or about 2°C and/or a gas pressure from 10 to 300 bar, or from 15 to 80 bar, or from 15 to 35 bar, or from 15 to 30 bar.

18. A method according to any one of claims 13-17, wherein the (1) solution- or dispersion-based slurry is added to the (2) matrix fluid system until their foamed (1+2) mixture reaches a gas volume fraction of from 0.1 to 0.95, or from 0.2 to 80%, or from 0.2 to 75%, or from 0.3% to 65%.

19. A method according to any one of claims 13-18, wherein in the step of releasing the pressure and/or increasing the temperature of the (1+2) mixture, the pressure is released to between 1 bar and 10 bar, or to between 5 bar to 10 bar, and/or the temperature of the (1+2) mixture is increased to between -5°C and 10°C, or to 0°C or above, or about 5°C.

20. A method according to any one of claims 13(a,b)-19 wherein the foamed (1+2) mixture is extruded at temperatures between -5 and 20°C as a cold to ambient foam product.

21. A method according to any one of claims 13-19, wherein the method comprises an additional step of reducing the temperature and/or fast-freezing the foamed (1+2) mixture.

22. A method according to any one of claims 13 (a,b)-19 and 21 wherein the foamed (1+2) mixture is extruded at temperatures between -15 and -5°C as a partially frozen foam product.

23. A porous powder obtained by a method according to any one of claims 13 (a-d)-19 and 21.

24. A porous powder, wherein the powder has a closed porosity of 15% to 95%, or 20% to 50%, or 25% to 35%, or 30 to 35%, or about 30%.

25. A porous powder according to claim 23 or claim 24, A method according to claim 4-7, 9-11, or a sugar-based slurry according to claim 8-11, wherein the slurry has a viscosity of between between 10⁻² and 10 Pas or between 20 to 1 Pas or between 30 mPas and 500 mPas or about 30 - 40 mPas.

26. A porous powder according to claim 25, wherein the bimodal closed pore distribution comprises (i) closed or open pores with an average diameter of 20 to 200 microns, or 20 to 50 microns, or 25 to 45 microns, or about 40 microns; and (ii) closed pores with an average diameter of less than about 20 microns, or 1 to less than 20 microns, or 1-10 microns, or 2-5 microns.

27. A porous powder according to claim 25, wherein (i) contributes 10 to 99% by volume of the total closed pore volume and/or (ii) contributes 1 to 90% by volume of the total closed pore volume; and/or wherein (i) contributes 10 to 90% by number of the total closed pores and/or (ii) contributes 10 to 90% by number of the total closed pores.

28. A porous powder according to any one of claims 22-26, wherein the powder is freeze-dried.

## Amended claims

### Amended claims in accordance with Rule 137(2) EPC.

1. Use of a gas hydrate or a gas hydrate crystal slurry as natural propellant for producing a pore structure tailored foam or porous solid or powder from a viscous to paste-like fluid system having a viscosity between 10⁻³ to 10³ Pas measured at a shear rate of 100 s⁻¹ and at a temperature of 1°C in a rheometer/viscometer, or for gasifying such fluid system.

2. Use of a gas hydrate or a gas hydrate crystal slurry as natural propellant according to claim 1 whereby a mixture of (1) a viscous to paste-like matrix fluid system with (2) a gas hydrate or a gas hydrate crystal slurry is kept for a time period required for homogeneous mixing of (1) and (2) in a thermodynamically stable state at gas hydrate-specific combined pressure1-temperature1 conditions taken from the gas hydrate specific state diagram, under which gas hydrate crystal dissociation and related gas release is not possible .

3. Use of a gas hydrate or a gas hydrate crystal slurry as natural propellant according to claims 1 and 2 whereby the mixture of (1) a viscous to paste-like matrix fluid system with (2) a gas hydrate or a gas hydrate crystal slurry is transferred from a thermodynamically stable state, given at a first pressure1-temperature1 combination into a thermodynamically unstable state taken from the gas hydrate specific state diagram and given by a second pressure2-temperature2 combination in which the gas hydrate dissociates under release of gas, thus triggering the formation of a foam or gas dispersion in the viscous to paste-like matrix fluid system (1).

4. Use of a gas hydrate or a gas hydrate crystal slurry as natural propellant according to claims 1-3 whereby the foaming gas released from the dissociating gas hydrate crystals comprises air and/or one or more of carbon dioxide, nitrogen, oxygen, noble gases, hydrocarbons, propane, ethylene, methane and nitrous oxide or mixtures thereof, preferably carbon dioxide and/or nitrogen or mixtures thereof.

5. A method of producing a pore structure tailored liquid/semi-liquid foam or porous solid or porous powder comprising:
(a) mixing (1) a matrix fluid system being of solution or dispersion nature and of low viscous to paste-like high viscosity in the range between 10⁻³ to 10³ Pas measured at a shear rate of 100 s⁻¹ and at a temperature of 1°C in a rheometer/viscometer, and (2) a solution- or dispersion-based slurry comprising gas hydrate crystals to provide a homogeneous fluid mixture from (1) and (2).
(b) releasing the pressure and/or increasing the temperature of the homogeneous fluid mixture from (1) and (2) to provide a foamed (1+2) mixed fluid system of liquid to semi-liquid consistency;
(c) drying the foamed (1+2) mixed fluid system, preferably by freeze-drying or microwave assisted vacuum drying, to provide a dried porous (1+2) mixed solid; and
(d) grinding the dried porous (1+2) mixed solid, to provide a porous powder.

6. A method according to claim 5 where the solution- or dispersion-based slurry comprising gas hydrate crystals (2) is provided by a Sub-Method A comprising:
(i) providing a watery solution with soluble components generating a freezing point depression;
(ii) cooling the watery solution to a temperature at which the formed gas hydrate is thermodynamically stable,
(iii) pressurizing the watery solution with a selected gas with which the gas hydrate is formed at a gas hydrate specific pressure at which the formed gas hydrate is thermodynamically stable and
(iv) applying to the watery solution with a selected gas with which the gas hydrate is formed a flow field by using a static or dynamic mixer or a surface scraped heat exchanger (SSHE) to evenly distribute / mix the gas hydrate crystals within the watery solution denoted under (i) to provide a homogeneous slurry of the gas hydrates.

7. A method according to claim 5, wherein the sub-method A according to claim 6 providing the solution- or dispersion-based slurry containing gas hydrate crystals (2) comprising: cooling the solution to between -10°C and 8°C, or to between -8°C and 7°C, or to between -5°C and 5°C, or to no lower than about - 5°C and/or the gas pressure is from 10 to 300 bar, or from 15 to 100 bar, or from 15 to 35 bar, or from 15 to 30 bar.

8. A method according to claim 6 or 7, wherein the sub-method A comprises cooling the solution to between 0 and 5°C, preferably to about 3°C; and pressurizing the solution with carbon dioxide, at 15-25 bar, preferably at about 20 bar, prior to to pressurizing the solution with nitrogen, at 30-285 bar or preferably at about 35-50 bar or even more preferably at about 35 bar.

9. A method according any of the claims 5-8 wherein the solution- or dispersion-based slurry comprising gas hydrates (2), wherein the gas is air and/or comprises one or more of carbon dioxide, nitrogen, nitrous oxide, oxygen, noble gases, hydro-carbons, propane, ethylene, methane and nitrous oxide or mixtures thereof, preferably carbon dioxide and/or nitrogen or mixtures thereof.

10. A method according any of the claims 5-9 wherein the solution- or dispersion-based slurry comprising gas hydrates (2), comprises carbon dioxide, preferably 0.01-7.5 mol/L, preferably 1-5 mol/L or more preferably 1-2 mol/L or most preferably 1.4 mol/L of carbon dioxide and/or 0.01-0.5mol/L, preferably 0.02-0.1 mol/L, or even more preferably about 0.05 mol/L of nitrogen.

11. A method according to any of the claims 5-10, wherein the solution- or dispersion-based slurry comprising gas hydrates (2) has a ratio of gas in the hydrate fraction to the liquid fraction (H:L) of about 5:1 with volumetric hydrate fractions of 15 to 35 vol%, or preferably of about 3:2 with volumetric hydrate fractions of 12 to 14 vol%, or more preferably of 1.2:1 at with about 10 vol% hydrate fraction, or most preferably of about 2:1 at about 17 vol% gas hydrate fraction.

12. A method according to any of the claims 5-11 wherein the solution- or dispersion-based slurry comprising gas hydrates (2) contains 10 wt% to 65 wt%, preferably 10 wt% to 50 wt%, more preferably 20 wt% to 40 wt%, or most preferably about 25 wt% of solids.

13. A method according to any of the claims 5-12, wherein the solution- or dispersion-based slurry comprising gas hydrates (2) has a viscosity of between 10⁻² and 100 Pas or preferably between 20 mPas to 1 Pas, more preferably between 30 mPas and 500 mPas or most preferably between 30 to 40 mPas.

14. A method according to claim 5, wherein the matrix fluid system (1) comprises 10 wt% to 75 wt%, preferably 30 wt% to 70 wt%, more preferably 50 wt% to 65 or most preferably about 60 wt% solids.

15. A method according to claim 5, wherein the matrix fluid system (1) is a liquid to semi-liquid (paste-like) fluid system with viscosity ranging from water-like 0.001 Pas to highly paste-like 1000 Pas measured at a shear rate of 100 s⁻¹ and at a temperature of 1°C in a rheometer/viscometer, .

16. A method according claims 5, wherein the solution- or dispersion based slurry comprising gas hydrate crystals (2) according to claims 6 to 13 is added to the matrix fluid system (1) under approximately isobaric-isothermal conditions, preferably wherein the approximately isothermal-isobaric conditions are at a temperature of between -10°C and 10°C, or preferably between 0°C and 10°C, or more preferably between 0°C and 5°C, or most preferably about 2°C and/or a gas pressure from 10 to 300 bar, or preferably from 15 to 80 bar, or more preferably from 15 to 35 bar, or most preferably from 15 to 30 bar.

17. A method according to claims 5 wherein the solution- or dispersion based slurry comprising gas hydrate crystals (2) according to claims 6-13 is added to the matrix fluid system (1) until their foamed (1+2) mixture after final pressure release to atmospheric pressure reaches a gas volume fraction of from 0.1 to 0.95, or preferably from 0.2 to 0.8, or more preferably from 0.2 to 0.75, or most preferably from 0.3 to 0.65.

18. A method according to claim 5, wherein in the step of releasing the pressure and/or increasing the temperature of the (1+2) mixture, the pressure is released to between 1 bar and 10 bar, or preferably to between 5 bar to 10 bar, and/or the temperature of the (1+2) mixture is increased to between -5°C and 10°C, or preferably to 0°C or above, or more preferably to about 5°C.

19. A method according to claim 5, wherein the method comprises an additional step of reducing the temperature and/or fast-freezing the foamed (1+2) mixture.

20. A method according to claim 5 wherein the foamed (1+2) mixture is extruded at temperatures between -15 and -5°C as a partially frozen foam product.

21. A pore structure tailored porous solid or powder according to a method according to claim 5 and any of the claims 14-20 and applying a slurry comprising gas hydrate crystals (2) from sub-method A according to claims 6 to 13 as natural propellant.

22. A pore structure tailored porous solid or powder according to claim 21 wherein the solid or powder particles have a closed porosity of 15% to 95%, or preferably of 20% to 50%, or more preferably of 25% to 35%, or most preferably of 30 to 35%.

23. A pore structure tailored porous solid or powder according to claims 21 and 22, wherein a bimodal pore size distribution comprises (i) closed or open pores with an average diameter of 20 to 200 microns, or preferably of 25 to 50 microns, or more preferably of 25 to 45 microns, or most preferably of about 40 microns, and (ii) closed pores with an average diameter of less than about 20 microns, or preferably between 1 to less than 20 microns, or more preferably between 1-10 microns, or most preferably between 2-5 microns.

24. A pore structure tailored porous solid or powder according to claim 24, wherein (i) contributes 10 to 99% by volume to the total pore volume and/or (ii) contributes 1 to 90% by volume to the total pore volume; and/or wherein (i) contributes 10 to 90% by number of the total number of pores and/or (ii) contributes 10 to 90% by number to the total number of pores.

25. A pore structure tailored porous solid or powder according to any one of claims 21-25, wherein the powder is freeze-dried.
